# EUROPEAN PATENT APPLICATION

(11) **EP 4 707 891 A1**
(43) Date of publication of application: **11.03.2026**
(21) Application number: 24911395.2
(22) Date of filing: 27.12.2024
(51) Int. Cl.: G02B 6/44

(54) **MINIATURIZED OPTICAL CABLE CROSS-CONNECTING CABINET**

(30) Priority: 29.12.2023 CN 202311872611
(71) Applicant: FIBERHOME TELECOMMUNICATION TECHNOLOGIES CO., LTD., Hubei 430000 (CN)
(72) Inventor: HUANG, Meijin, Wuhan, Hubei 430000 (CN); ZOU, Feng, Wuhan, Hubei 430000 (CN); WANG, Jun, Wuhan, Hubei 430000 (CN); JIANG, Haojie, Wuhan, Hubei 430000 (CN); LI, Jian, Wuhan, Hubei 430000 (CN); HU, Ke, Wuhan, Hubei 430000 (CN); WANG, Anjing, Wuhan, Hubei 430000 (CN); LUO, Xi, Wuhan, Hubei 430000 (CN); ZHANG, Chongxuan, Wuhan, Hubei 430000 (CN); LIN, Jinhong, Wuhan, Hubei 430000 (CN); ZHANG, Zeming, Wuhan, Hubei 430000 (CN)
(74) Representative: Lohmanns Lohmanns & Partner mbB
(86) International application number: PCT/CN2024/142965
(87) International publication number: WO 2025/140474

(57) **Abstract**

The present application relates to a miniaturized optical cable cross-connecting cabinet, comprising a cabinet body, a door panel, an internal component and a telescopic assembly, wherein the door panel is disposed on the cabinet body; the telescopic assembly is located on a side wall of the cabinet body, the side wall being adjacent to the door panel; and one end of the telescopic assembly is fixed to the side wall, and the other end of the telescopic assembly is rotationally connected to the internal component and configured to extend or retract, such that the internal component extends out from the cabinet body or retracts back into the cabinet body. The present application designs the push-pull and rotation operations of the internal component, enabling an external space to be fully utilized to realize the operation of each functional module on the internal component; thus, while ensuring a sufficient operation space, the size of the cabinet body of the optical cable cross-connecting cabinet is reduced, reducing the area of land resources occupied by the optical cable distribution cabinet, saving land resources.

## Description

### Field of the Invention

The present application relates to the field of optical communication technology, and in particular, to a miniaturized optical cable cross-connecting cabinet.

### Background of the Invention

Optical cable cross-connecting cabinets are one of the core products in optical fiber access networks, generally used as user aggregation points for optical fiber access. These products typically have a large optical fiber capacity and usually require numerous functions such as optical fiber splicing, optical fiber termination, and optical splitting to be implemented inside the products.

In the prior art, the optical cable cross-connecting cabinet typically comprises a door panel, a cabinet body, and internal components, and the internal components are usually fixedly provided in the cabinet body and comprise a splicing functional module, a termination functional module, a splitting functional module, and the like. When it is necessary to perform operations on these functional modules, it is usually required to insert a hand into the cabinet body to perform the operations. To ensure sufficient operating space, the internal space of the cabinet body is generally designed to be relatively large, and the functional modules are restricted to positions on the front side that are easily accessible by hand.

It is precisely because most optical cable cross-connecting cabinets have a relatively large size that a large area is occupied during installation. However, in most urban scenarios, particularly in city centers and commercial areas, land resources are scarce. Therefore, during the construction of optical fiber access networks, obtaining approval for land resources for installing the optical cable cross-connecting cabinets becomes a construction difficulty.

### Summary of the Invention

The embodiment of the present application provides a miniaturized optical cable cross-connecting cabinet, which reduces the size of the cabinet body of the optical cable cross-connecting cabinet and the area of land resources occupied by the optical cable cross-connecting cabinet while ensuring a sufficient operating space, thereby saving land resources.

The embodiment of the present application provides a miniaturized optical cable cross-connecting cabinet, which comprises:
a cabinet body, on which a door panel is disposed;
an internal component; and
a telescopic assembly, which is located on a side wall of the cabinet body, and the side wall is adjacent to the door panel; and one end of the telescopic assembly is fixed to the side wall, and the other end is rotationally connected to the internal component and configured to extend or retract, such that the internal component extends out from the cabinet body or retracts back into the cabinet body.

In some embodiments, the telescopic assembly comprises:
a fixed upright post, on which a vertical sliding groove is provided;
a movable upright post, which is rotationally connected to the internal component and on which a vertical sliding groove is provided; and
two telescopic arms, which are arranged in a crossed manner and rotationally connected to each other, one end of each telescopic arm is respectively rotationally connected to the fixed upright post and the movable upright post, and the other end is respectively movably disposed in the vertical sliding grooves of the fixed upright post and the movable upright post through a sliding pin.

In some embodiments, the telescopic assembly further comprises a guiding mechanism, the guiding mechanism comprises a guiding member and a horizontal guiding groove, the guiding member is provided on the movable upright post, and the horizontal guiding groove is provided on the side wall of the cabinet body.

In some embodiments, a guiding member is also provided on the internal component, and when the internal component extends out from the cabinet body, the guiding member slides out of the horizontal guiding groove.

In some embodiments, the internal component comprises a frame, which is rotationally connected to the telescopic assembly, and when the frame retracts back into the cabinet body, the wall surface of the frame facing the door panel is successively provided from top to bottom with a splitter module, a termination module, and a docking module, and a splitter pigtail management module is also provided on the side of the termination module; and
the wall surface of the frame away from the telescopic assembly is successively provided from top to bottom with a pigtail management module, a splicing module, an optical fiber management module, and an optical fiber fixing module.

In some embodiments, the telescopic assembly is rotationally connected to the internal component through a rotating shaft; and/or,
the cabinet body is connected to the door panel through an embedded hinge; and/or,
the door panel comprises a door panel outer layer and a door panel inner layer connected to each other, and a door panel reinforcement is provided between the door panel outer layer and the door panel inner layer; and/or,
the cabinet body comprises a cabinet body outer layer and a cabinet body inner layer connected to each other, and a corner reinforcement is provided at a corner of the cabinet body between the cabinet body outer layer and the cabinet body inner layer; and/or,
a lock rod guiding seat is provided on an inner wall of the door panel, a lock rod of an anti-theft lock mounted on the door panel passes vertically through a lock rod guiding hole of the lock rod guiding seat, and a lock rod pin hole adapted to the lock rod is provided in the cabinet body; and/or,
an operating platform is rotationally provided on the inner wall of the door panel, a supporting platform located below the operating platform is also provided on the inner wall of the door panel, a supporting rod is rotationally connected to the operating platform, and when the supporting rod rotates to resist on the supporting platform, the operating platform is in a horizontal state; and/or,
a plurality of cable sealing modules for optical cable entry and exit are mounted at the bottom of the cabinet body; and/or,
a floor-mounted base is provided at the bottom of the cabinet body.

In some embodiments, the cabinet body is provided with an open top cover, and a cable sealing module for optical cable entry and exit is mounted on an opening provided on the open top cover.

In some embodiments, each side of the open top cover of the cabinet body is provided with the opening, wherein the cable sealing module is mounted on one of the openings, and a blind hole sealing module is mounted on the other opening; or, the open top cover of the cabinet body is provided with two mutually perpendicular axes of symmetry, wherein one axis of symmetry is a line connecting midpoints of two short sides of the open top cover, and the other axis of symmetry is a line connecting midpoints of two long sides of the open top cover, and one opening is provided, which is located on one of the two sides of the open top cover of the cabinet body; and/or
the cabinet body is further provided with a closed top cover, and the closed top cover and the open top cover are alternatively mounted on the top of the cabinet body; and/or,
a top shielding cover configured to cover the cable sealing module is provided on the open top cover.

In some embodiments, a pole clamp mounting assembly configured to mount on a pole clamp is provided on the side wall of the cabinet body.

In some embodiments, the pole clamp mounting assembly comprises a pole clamp bracket and a hoop clamp, wherein the pole clamp bracket is provided on the cabinet body, and a hoop clamp hole for the hoop clamp to pass through is provided on the pole clamp bracket; or,
the pole clamp mounting assembly comprises the hoop clamp, a first mounting portion, and a second mounting portion, wherein the first mounting portion is mounted on the hoop clamp, the second mounting portion is provided on the cabinet body, a protrusion is provided on the first mounting portion, and an insertion slot that is adapted to the protrusion on the first mounting portion is provided on the second mounting portion, or the insertion slot is provided on the first mounting portion, and the protrusion that is adapted to the insertion slot on the first mounting portion is provided on the second mounting portion.

The beneficial effects brought by the technical solution provided in the present application comprise:
In the embodiment of the present application, the internal component of the optical cable cross-connecting cabinet is rotationally connected to one end of the telescopic assembly, while the other end of the telescopic assembly is fixed to the inner wall of the cabinet body adjacent to the door panel, since the telescopic assembly can extend or retract, when it is necessary to perform operations on the functional modules of the internal component, the internal component can be pulled outward, causing the telescopic assembly to extend accordingly, so the internal component extends out from the cabinet body, thereby utilizing external space of the cabinet body for operation. Since the internal component is rotationally connected to the telescopic assembly, when it is necessary to perform operations on the functional modules located on the side or back of the internal component, the internal component can be rotated to facilitate the operation; and after completing the operation, the internal component can be rotated back to the original position and then pushed into the cabinet body, causing the telescopic assembly to retract, thereby allowing the internal component to return to the interior of the cabinet body, and the door panel can then be closed and secured.

It can be seen that the present application designs the push-pull and rotation operations of the internal component, enabling an external space to be fully utilized to realize the operation of each functional module on the internal component, thereby reducing the size of the cabinet body of the optical cable cross-connecting cabinet and the area of land resources occupied by the optical cable cross-connecting cabinet, and saving the land resources while ensuring a sufficient operation space.

### Brief Description of the Drawings

In order to better illustrate the technical solution in the embodiments of the present application, the following will briefly introduce the drawings needed in the description of the embodiments, and it is obvious that the drawings in the following description are part of embodiments of the present application, for those of ordinary skill in the art, other drawings may also be obtained based on these drawings without any inventive effort.
Fig. 1 is a first perspective view of a miniaturized optical cable cross-connecting cabinet in the embodiment of the present application;
Fig. 2 is a second perspective view of a miniaturized optical cable cross-connecting cabinet in the embodiment of the present application;
Fig. 3 is a first perspective view of an internal component in the embodiment of the present application;
Fig. 4 is a second perspective view of an internal component in the embodiment of the present application;
Fig. 5 is a first perspective view of a telescopic assembly in the embodiment of the present application;
Fig. 6 is a second perspective view of a telescopic assembly in the embodiment of the present application;
Fig. 7 is a schematic view of a miniaturized optical cable cross-connecting cabinet with a door panel closed in the embodiment of the present application;
Fig. 8 is an installation schematic view of a door panel reinforcement of a door panel in the embodiment of the present application;
Fig. 9 is an installation schematic view of a corner reinforcement of a cabinet body in the embodiment of the present application;
Fig. 10 is a schematic view of a lock rod pin hole on a top of a cabinet body in the embodiment of the present application;
Fig. 11 is a schematic view of an open top cover (with one opening) in the embodiment of the present application;
Fig. 12 is a schematic view of an open top cover equipped with a cable sealing module and a blind hole sealing module in the embodiment of the present application;
Fig. 13 is a schematic view of an open top cover (with two openings) in the embodiment of the present application;
Fig. 14 is a schematic view of a closed top cover in the embodiment of the present application;
Fig. 15 is a schematic view of an assembly of a cabinet body and a pole clamp in the embodiment of the present application;
Fig. 16 is a schematic view of another assembly of a cabinet body and a pole clamp in the embodiment of the present application;
Fig. 17 is a schematic view of the first mounting portion and the second mounting portion in the embodiment of the present application.
1-cabinet body; 2-door panel; 3-internal component; 4-telescopic assembly; 5-fixed upright post; 6-movable upright post; 7-vertical sliding groove; 8-telescopic arm; 9-guiding member; 10-horizontal guiding groove; 11-splitter module; 12- termination module; 13-docking module; 14-splitter pigtail management module; 15-pigtail management module; 16-splicing module; 17-optical fiber management module; 18-optical fiber fixing module; 19-rotating shaft; 20-embedded hinge; 21-door panel reinforcement; 22-corner reinforcement; 23-lock rod guiding seat; 24-anti-theft lock; 25-lock rod; 26-lock rod pin hole; 27-operating platform; 28-supporting platform; 29-supporting rod; 30-cable sealing module; 31-opening; 32-open top cover; 33-blind hole sealing module; 34-closed top cover; 35-top shielding cover; 36-floor mounting base; 37-pole clamp mounting assembly; 38- pole clamp bracket; 39- hoop clamp; 40- hoop clamp hole; 41-the first mounting portion; 42-the second mounting portion; 43-protrusion; 44-insertion slot; 45-fiber routing unit; 46-pigtail inlet/outlet; 47-bayonet.

### Detailed Description of the Embodiments

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without inventive efforts shall fall within the protection scope of the present application.

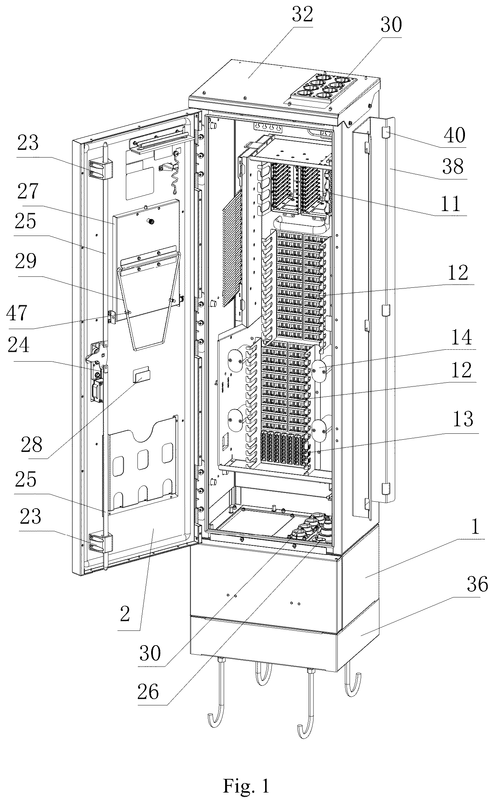

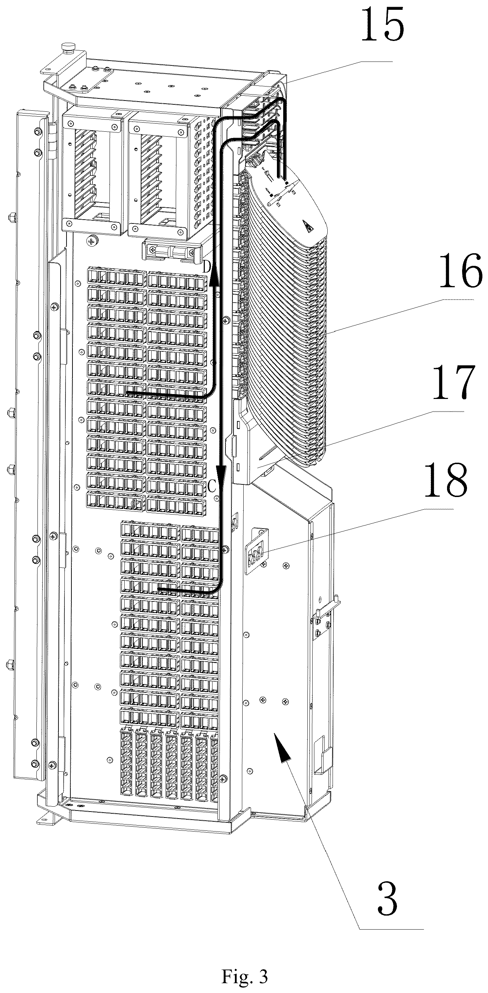

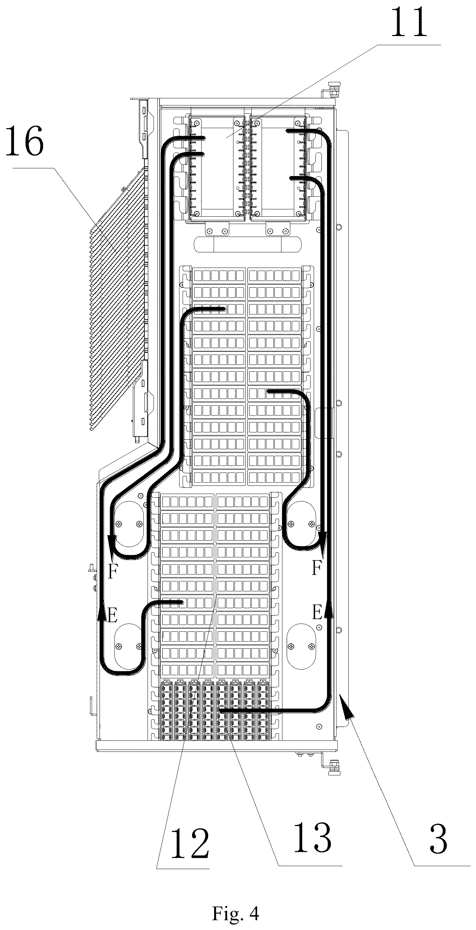

As shown in Figs. 1, 2, 3, 4, 5, and 6, the embodiment of the present application provides a miniaturized optical cable cross-connecting cabinet, which includes a cabinet body 1, a door panel 2, an internal component 3, and a telescopic assembly 4, and the door panel 2 is mounted on the cabinet body 1 and configured to open and close the cabinet body 1; the telescopic assembly 4 is located on a side wall of the cabinet body 1, the side wall being adjacent to the door panel 2; and one end of the telescopic assembly 4 is fixed to the side wall, and the other end of the telescopic assembly 4 is rotationally connected to the internal component 3 and configured to extend or retract, such that the internal component 3 extends out from the cabinet body 1 or retracts back into the cabinet body 1.

In the embodiment of the present application, the internal component 3 of the optical cable cross-connecting cabinet is rotationally connected to one end of the telescopic assembly 4, while the other end of the telescopic assembly 4 is fixed to the inner wall of the cabinet body 1 adjacent to the door panel 2, since the telescopic assembly 4 can extend or retract, when it is necessary to perform operations on the functional modules of the internal component 3, the internal component 3 can be pulled outward, causing the telescopic assembly 4 to extend accordingly, so the internal component 3 extends out from the cabinet body 1, thereby utilizing external space of the cabinet body 1 for operation. Since the internal component 3 is rotationally connected to the telescopic assembly 4, when it is necessary to perform operations on the functional modules located on the side or back of the internal component 3, the internal component 3 can be rotated to facilitate the operation; and after completing the operation, the internal component 3 can be rotated back to the original position and then pushed into the cabinet body 1, causing the telescopic assembly 4 to retract, thereby allowing the internal component 3 to return to the interior of the cabinet body 1, and the door panel 2 can then be closed and secured.

It can be seen that the present application designs the push-pull and rotation operations of the internal component 3, enabling an external space to be fully utilized to realize the operation of each functional module on the internal component 3, thereby reducing the size of the cabinet body of the optical cable cross-connecting cabinet and the area of land resources occupied by the optical cable cross-connecting cabinet, and saving the land resources while ensuring a sufficient operation space.

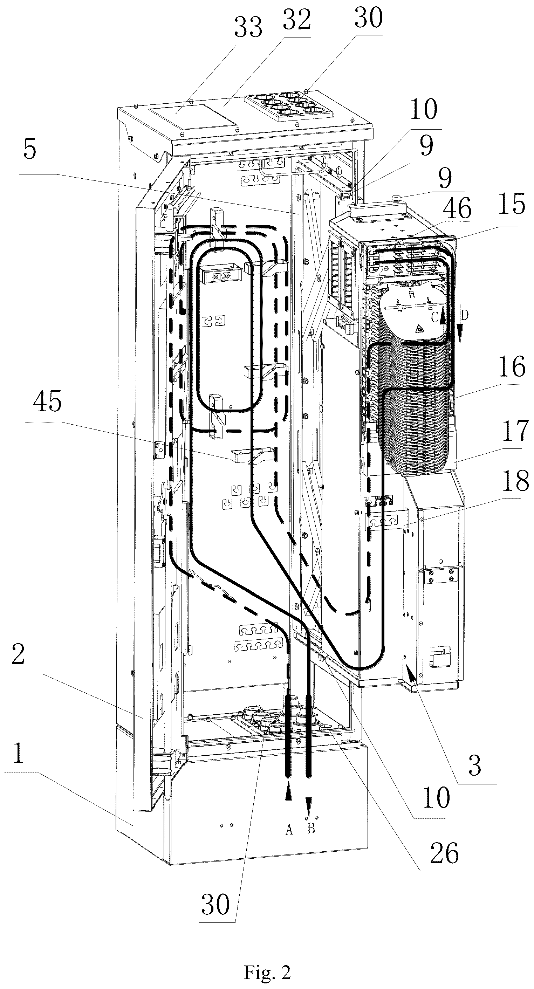

It can be understood that, in the present application, the cabinet body 1 is provided with three side walls, one of which is a rear side wall opposite to the door panel 2, and the other two side walls are arranged in parallel and opposite to each other, one of the two side walls is a left side wall and the other is a right side wall, and the telescopic assembly 4 can be disposed on either the left side wall or the right side wall. Since the door panel 2 is usually mounted on the left side wall and rotates to the left to open, for more convenient operation and better compliance with operating habits, the telescopic assembly 4 is mounted on the right side wall, as shown in Fig. 1 and Fig. 2.

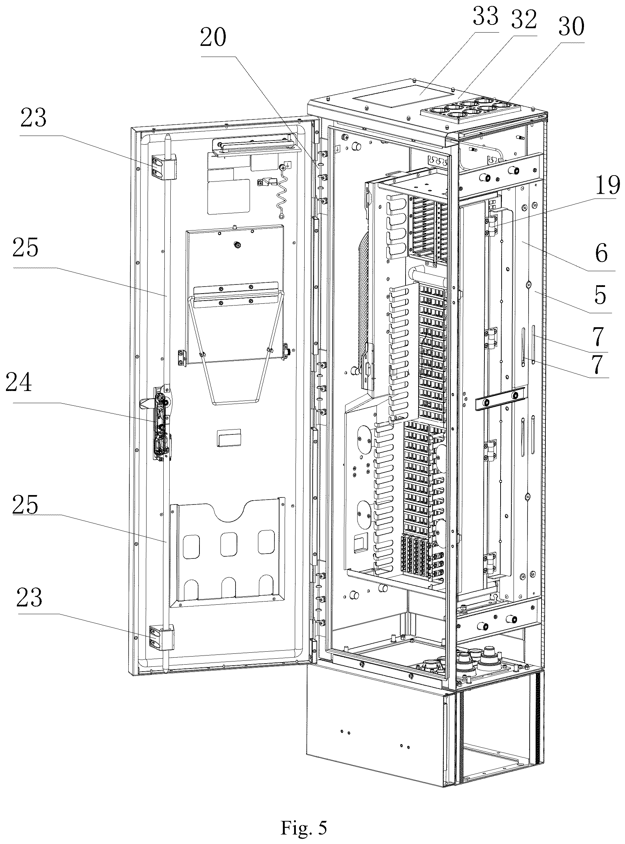

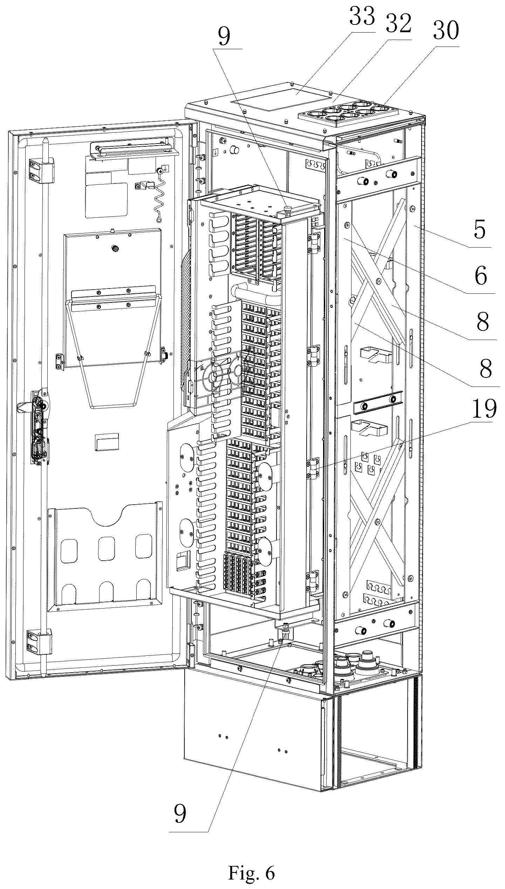

In order to enable the internal component 3 to extend out from or retracts back into the cabinet body 1, the present application further provides a specific structure of the telescopic assembly 4, as shown in Fig. 5 and Fig. 6. The telescopic assembly 4 comprises a fixed upright post 5, a movable upright post 6, a vertical sliding groove 7, and two telescopic arms 8, the fixed upright post 5 is provided with the vertical sliding groove 7, and the movable upright post 6 is rotationally connected to the internal component 3 and is provided with the vertical sliding groove 7 thereon; and the two telescopic arms 8 are arranged in a crossed manner and rotationally connected, with one end of each telescopic arm 8 respectively rotationally connected to the fixed upright post 5 and the movable upright post 6, and the other end respectively movably disposed in the vertical sliding grooves 7 of the fixed upright post 5 and the movable upright post 6 through a sliding pin.

When the internal component 3 is pulled outward, the movable upright post 6 moves outward accordingly, due to the presence of the vertical sliding groove 7, the movable upright post 6 drives the two telescopic arms 8 to rotate and extend, thereby achieving the purpose of extension, and when the internal component 3 is pushed inward, the two telescopic arms 8 move in the opposite direction and finally retract.

It can be understood that the two telescopic arms 8 form one set, and a plurality of sets can be provided according to the lengths of the fixed upright post 5 and the movable upright post 6. For example, as shown in Fig. 6, two sets of telescopic arms 8 are provided to prevent uneven local stress that may cause jamming and result in unsmooth movement.

The present application adopts the above-mentioned crossed telescopic arms 8 to achieve telescopic extension and retraction, for at least the following reasons: on one hand, the structure is simple and efficient, and providing such a structure in the already compact cabinet body 1 does not excessively occupy internal space; and on the other hand, a plurality of sets of telescopic arms 8 can be additionally provided according to actual requirements to achieve uniform stress distribution and ensure smooth movement.

It can be understood that, in addition to the above-mentioned crossed telescopic arms 8, other solutions can also be adopted. For example, a driving device such as a pneumatic cylinder or a hydraulic cylinder can be mounted on the sidewall, and the telescopic shaft of the pneumatic cylinder or the hydraulic cylinder can be used to push the movable upright post 6 so as to achieve telescopic extension and retraction.

To further ensure the smooth movement of the movable upright post 6, the telescopic assembly 4 provided in the present application also comprises a guiding mechanism. As shown in Fig. 2, the guiding mechanism comprises a guiding member 9 and a horizontal guiding groove 10, the horizontal guiding groove 10 can be formed through bending a sheet-metal member, the guiding member 9 is provided on the movable upright post 6, and the horizontal guiding groove 10 is provided on the sidewall of the box body 1.

It can be understood that two guiding mechanisms can be provided, one above and one below. As shown in Fig. 2, a horizontal guiding groove 10 is provided above the top of the fixed upright post 5, and another horizontal guiding groove 10 is similarly provided below the bottom of the fixed upright post 5.

Further, as shown in Fig. 2 and Fig. 6, the internal component 3 is also provided with a guiding member 9, and when the internal component 3 extends out from the cabinet body 1, the guiding member 9 slides out of the horizontal guiding groove 10. Through providing the guiding member 9 on the internal component 3, the internal component 3 can be pushed back into the cabinet body 1 more smoothly under the guiding constraint of the horizontal guiding groove 10.

It can be understood that the guiding member 9 can be implemented through a bolt or similar element, and in order to reduce friction, the guiding member 9 is preferably implemented as a roller. Compared with sliding friction, rolling friction requires less operating force, enabling the operator to push and pull the component with greater ease and convenience.

As shown in Figs. 1, 2, 3, and 4, in the present application, the internal component 3 comprises a frame rotationally connected to the telescopic assembly 4, and when the frame retracts back into the cabinet body 1, the wall surface of the frame facing the door panel 2 is successively provided from top to bottom with a splitter module 11, a termination module 12, and a docking module 13, and a splitter pigtail management module 14 is also provided on the side of the termination module 12; and the wall surface of the frame away from the telescopic assembly 4 is successively provided from top to bottom with a pigtail management module 15, a splicing module 16, an optical fiber management module 17, and an optical fiber fixing module 18.

The present application also provides an optical fiber routing path suitable for this layout. Taking cable entry and exit at the bottom of the cabinet body 1 as an example, as shown in Figs. 2, 3, and 4, several cable sealing modules 30 for optical cable entry and exit are mounted at the bottom of the cabinet body 1, and a fiber routing unit 45 is provided on the rear side wall of the cabinet body 1.

The input optical cable enters the cabinet body 1 from the cable sealing module 30 at the bottom, then the input optical fiber (labeled as A) is branched and routed along the fiber routing unit 45 on the rear side wall of the cabinet body 1. The input optical fiber A is fixed on the optical fiber fixing module 18 and then enters the splicing module 16 to be spliced with the input-end pigtail (labeled as C). The input-end pigtail C is routed along the pigtail management module 15, passes through the pigtail inlet/outlet 46 on the pigtail management module 15, and is routed downward behind the pigtail management module 15 into the termination module 12, where it is terminated with the splitter input-end pigtail (labeled as E) through the termination module 12. The splitter input-end pigtail E passes along the front of the termination module 12, is routed upward through the splitter pigtail management module 14, and enters the splitter module 11, where the optical signal is transmitted through the splitter input-end pigtail E into the splitter module 11 for optical splitting.

After the optical splitting, the splitter output-end pigtail (labeled as F) is output and exits from the splitter module 11, passes through the splitter pigtail management module 14, and enters the termination module 12, and is terminated with the output-end pigtail (labeled as D) through the termination module 12. The output-end pigtail D exits from the back of the termination module 12, passes upward through the pigtail inlet/outlet 46 on the pigtail management module 15, routes along the pigtail management module 15, and is spliced with the output optical fiber (labeled as B) in the splicing module 16. The output optical fiber B then routes along the fiber routing unit 45 on the rear side wall of the cabinet body 1 and exits the cabinet body 1 through the cable sealing module 30 at the bottom.

As shown in Fig. 5 and Fig. 6, in the present application, the telescopic assembly 4 is rotationally connected to the internal component 3 through a rotating shaft 19; and/or, it can be understood that a plurality of rotating shafts 19 can be provided.

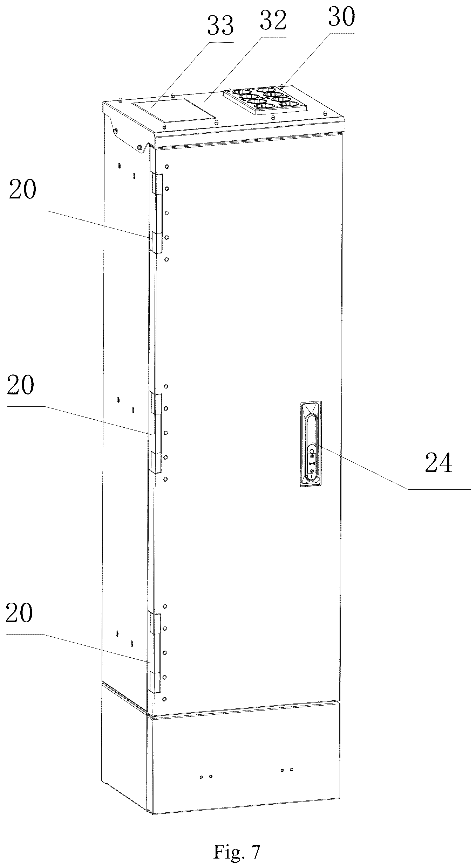

To enhance the anti-theft capability of the cross-connecting cabinet, as shown in Fig. 7, in the present application, the cabinet body 1 is connected to the door panel 2 through an embedded hinge 20; in this way, when the door panel 2 is closed, the gap between the door panel 2 and the cabinet body 1 is minimal, which not only provides good sealing to prevent rainwater ingress, but also makes it difficult to pry open with tools, thereby improving the anti-theft capability.

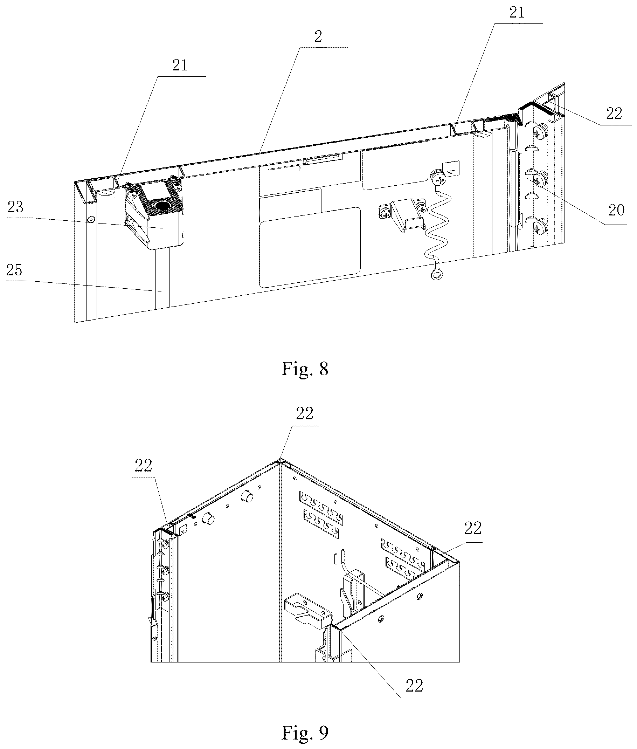

Further, as shown in Fig. 8, the door panel 2 comprises a door panel outer layer and a door panel inner layer connected to each other, and in the present application, a door panel reinforcement 21 is provided between the door panel outer layer and the door panel inner layer; and through providing the door panel reinforcement 21, the strength of the door panel 2 is increased, thereby enhancing the anti-theft capability. It can be understood that the above-mentioned door panel reinforcement 21 can be formed through bending a sheet metal member, and a plurality of the door panel reinforcements 21 can be provided.

Further, as shown in Fig. 9, the cabinet body 1 comprises a cabinet outer layer and a cabinet inner layer connected to each other, and a corner reinforcement 22 is provided at a corner of the cabinet body 1 between the cabinet body outer layer and the cabinet body inner layer; and through providing the corner reinforcement 22, the strength of the cabinet body 1 is increased, thereby enhancing the anti-theft capability. It can be understood that the above-mentioned corner reinforcement 22 can be formed through bending a sheet metal member, and a plurality of the corner reinforcements 22 can be provided.

Further, as shown in Fig. 1, a lock rod guiding seat 23 is disposed on the inner wall of the door panel 2, and the lock rod 25 of the anti-theft lock 24 installed on the door panel 2 vertically passes through the lock rod guiding hole of the lock rod guiding seat 23, and a lock rod pin hole 26 adapted to the lock rod 25 is provided inside the cabinet body 1. Since the lock rod 25 is relatively long, the bending resistance of the lock rod 25 can be enhanced through providing the lock rod guiding seat 23 and the lock rod pin hole 26, and when a strong outward force is applied to the door panel 2, one end of the lock rod 25 passes through the lock rod guiding seat 23 and the lock rod pin hole 26, while the other end is connected to the anti-theft lock 24. In this case, the lock rod 25 is subjected to forces at the lock rod guiding seat 23, the lock rod pin hole 26, and the anti-theft lock 24, making it difficult to bend and preventing the door panel 2 from being opened, thereby improving the anti-theft capability of the cross-connecting cabinet.

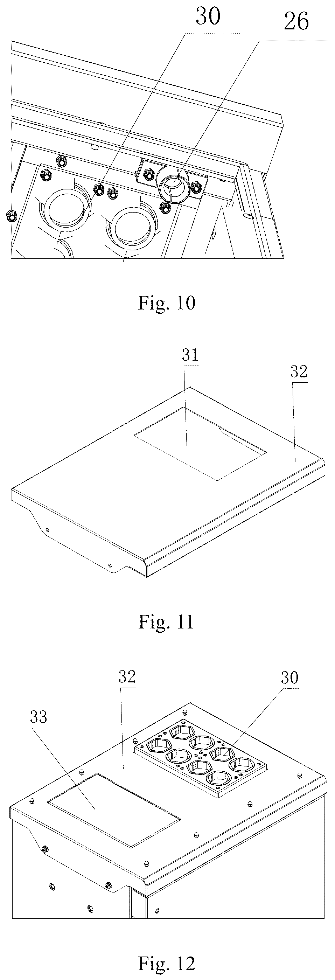

It can be seen in Fig. 1 that two lock rods 25, an upper one and a lower one, are provided, and each lock rod 25 is equipped with a corresponding lock rod guiding seat 23. The lock rod pin hole 26 corresponding to the lower lock rod 25 is arranged at the bottom of the cabinet body 1, as shown in Fig. 10, while the lock rod pin hole 26 corresponding to the upper lock rod 25 is arranged at the top of the cabinet body 1. When the anti-theft lock 24 is turned, the two lock rods 25 move toward each other to unlock, allowing the door panel 2 to be opened, or move away from each other to engage the corresponding lock rod pin holes 26, thereby achieving locking.

Further, as shown in Fig. 1, an operating platform 27 is rotationally mounted on the inner wall of the door panel 2, and a supporting platform 28 below the operating platform 27 is also provided on the inner wall of the door panel 2, a supporting rod 29 is rotationally connected to the operating platform 27, and when the supporting rod 29 rotates to resists on the supporting platform 28, the operating platform 27 is in a horizontal state.

When the operating platform 27 is folded up, the supporting rod 29 can fit against the back of the operating platform 27. To secure the supporting rod 29, a bayonet 47 is provided on the back of the operating platform 27, into which the supporting rod 29 can be engaged.

Further, as shown in Fig. 1, a plurality of cable sealing modules 30 for optical cable entry and exit are mounted at the bottom of the cabinet body 1. It can be seen that in the present application, the optical cables can enter and exit either from the top or from the bottom of the cabinet body 1, with the choice flexibly made according to the actual installation conditions.

As shown in Figs. 1, 2, 11, 12, and 13, the cabinet body 1 is provided with an open top cover 32, and a cable sealing module 30 for optical cable entry and exit is mounted on the opening 31 provided on the open top cover 32, thereby achieving the purpose of allowing the optical cables to entry and exit from the top.

It can be understood that the open top cover 32 can be detachably mounted on the top of the cabinet body 1 by means of screws or the like.

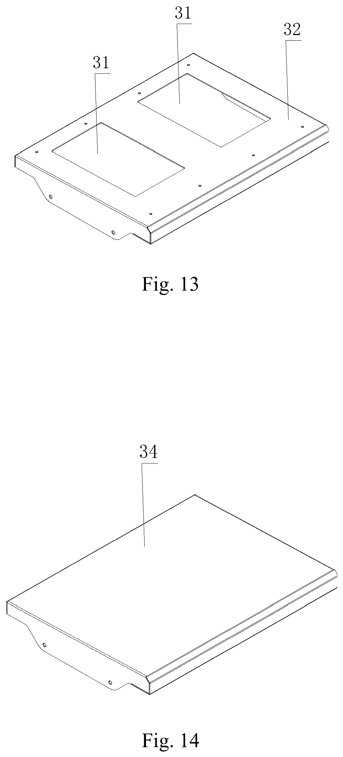

If there is no need for cable entry and exit at the top of the cabinet body 1, the sealing of the opening 31 becomes an issue. In the present application, two exemplary solutions are provided. For example, as an illustration, in one scheme, as shown in Fig. 14, the cabinet body 1 is provided with a closed top cover 34, the closed top cover 34 and the open top cover 32 are alternatively mounted on the top of the cabinet body 1, if the cable entry and exit are required at the top, the open top cover 32 is chosen to be mounted on the top of the cabinet body 1; if the cable entry and exit are not required at the top, it is replaced with the closed top cover 34. For example, as another illustration, as shown in Fig. 12, the open top cover 32 is provided with a blind hole sealing module 33, and through installing the blind hole sealing module 33 on the opening 31, the opening 31 is sealed.

Since the on-site optical cable layout can be complex, it may be necessary to change the positions of the cable entry and exit at the top. Therefore, to allow more flexible optical cable arrangement, the present application exemplarily provides two schemes for changing the position of the opening 31. For example, as an illustration, in one scheme, as shown in Fig. 12 and Fig. 13, the open top cover 32 of the cabinet body 1 is provided with an opening 31 on each side, a cable sealing module 30 is mounted on one of the openings 31, and a blind hole sealing module 33 is mounted on the other opening 31, and according to actual needs, the positions of the cable sealing module 30 and the blind hole sealing module 33 can be swapped, thereby changing the position of the opening 31 configured for cable entry and exit. For another example, as an illustration, in another scheme, as shown in Fig. 11, the open top cover 32 of the cabinet body 1 is provided with two mutually perpendicular axes of symmetry, wherein one axis of symmetry is a line connecting the midpoints of the two short sides of the open top cover 32, and the other axis of symmetry is a line connecting the midpoints of the two long sides of the open top cover 32, and one opening 31 is provided and located on one of the two sides of the open top cover 32 of the cabinet body 1. In this scheme, the open top cover 32 has a symmetrical structure, with the opening 31 provided on one side, and the position of the opening 31 can be changed through rotating the open top cover 32.

In addition, the closed top cover 34 and the open top cover 32 can be designed in an inclined shape to facilitate rainwater runoff.

Screw holes are provided on the side of the closed top cover 34 and the open top cover 32 adjacent to the door panel 2, so that removal or installation of the closed top cover 34 and the open top cover 32 requires opening the door panel 2, thereby providing better anti-theft performance.

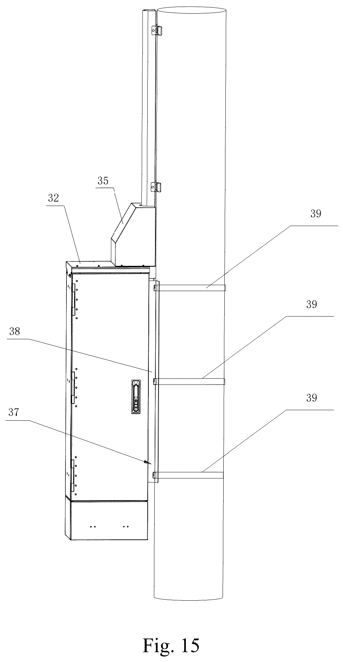

Further, as shown in Fig. 15, a top shielding cover 35 configured to cover the cable sealing module 30 is provided on the open top cover 32.

In the present application, the cabinet body 1 has at least two installation schemes. For example, a floor-mounted installation can be adopted. Specifically, as shown in Fig. 1, a floor mounting base 36 is provided at the bottom of the cabinet body 1.

For another example, as an illustration, a pole clamp installation manner can be adopted. Specifically, as shown in Fig. 15, a pole clamp mounting assembly 37 configured to mount on a pole clamp is provided on the side wall of the cabinet body 1.

Further, to achieve installation, the present application provides a specific structure of the pole clamp mounting assembly 37. For example, as shown in Fig. 1 and Fig. 15, the pole clamp mounting assembly 37 comprises a pole clamp bracket 38 and a hoop clamp 39. The pole clamp bracket 38 is disposed on the cabinet body 1, and a hoop clamp hole 40 for the hoop clamp 39 to pass through is provided on the pole clamp bracket 38. When in use, the hoop clamp 39 is inserted through the hoop clamp hole 40 on the pole clamp bracket 38 and then fastened onto the pole clamp. It can be understood that a plurality of hoop clamps 39 can be provided.

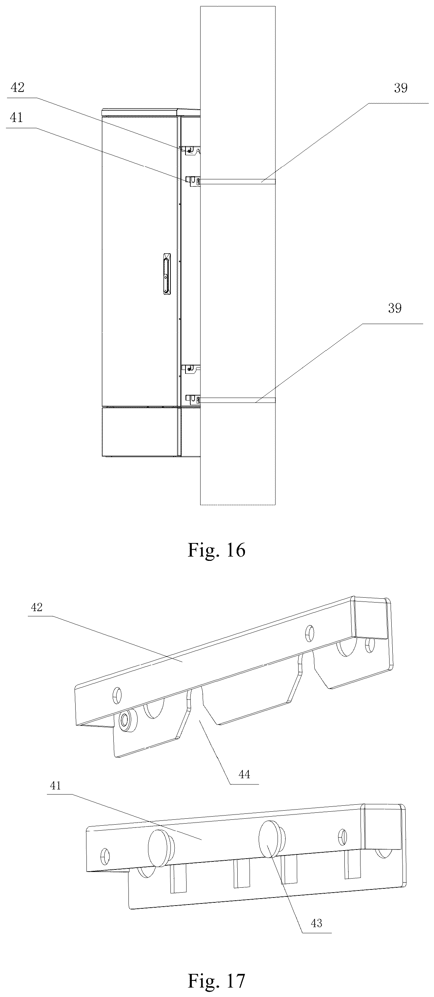

For another example, as another illustration, as shown in Fig. 16 and Fig. 17, the pole clamp mounting assembly 37 comprises a hoop clamp 39, a first mounting portion 41, and a second mounting portion 42. The first mounting portion 41 is mounted on the hoop clamp 39, the second mounting portion 42 is provided on the cabinet body 1, a protrusion 43 is provided on the first mounting portion 41, and an insertion slot 44 adapted to the protrusion 43 on the first mounting portion 41 is provided on the second mounting portion 42; or the insertion slot 44 is provided on the first mounting portion 41, and a protrusion 43 adapted to the insertion slot 44 on the first mounting portion 41 is provided on the second mounting portion 42. When in use, the hoop clamp 39 is fastened onto the pole clamp, and the cabinet body 1 is lowered downward so that the protrusion 43 is inserted into the insertion slot 44.

In the description of the present application, it should be noted that the orientation or positional relationships indicated by terms such as "upper", "lower ", etc., are based on the orientations or positional relationships shown in the drawings, and are used solely for the convenience of describing the present application and simplifying the description. These terms do not indicate or imply that the device or component referred to must have a specific orientation or be constructed and operated in a particular orientation. Therefore, these terms should not be understood as limiting the scope of the present application. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application can be understood according to specific circumstances.

It should be noted that relational terms such as "first" and "second" are only for distinguishing one entity or operation from another entity or operation in the present invention, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the scope of the present application. Therefore, the present application will not be limited to the embodiments shown in this document, but will be subject to the widest scope consistent with the principles and novel features applied herein.

## Claims

1. A miniaturized optical cable cross-connecting cabinet, comprising:
a cabinet body (1), on which a door panel (2) is disposed;
an internal component (3); and
a telescopic assembly (4), which is located on a side wall of the cabinet body (1), and the side wall is adjacent to the door panel (2); and one end of the telescopic assembly (4) is fixed to the side wall, and the other end is rotationally connected to the internal component (3) and configured to extend or retract, such that the internal component (3) extends out from the cabinet body (1) or retracts back into the cabinet body (1).

2. The miniaturized optical cable cross-connecting cabinet according to claim 1, wherein the telescopic assembly (4) comprises:
a fixed upright post (5), on which a vertical sliding groove (7) is provided;
a movable upright post (6), which is rotationally connected to the internal component (3) and on which a vertical sliding groove (7) is provided; and
two telescopic arms (8), which are arranged in a crossed manner and rotationally connected to each other, one end of each telescopic arm (8) is respectively rotationally connected to the fixed upright post (5) and the movable upright post (6), and the other end is respectively movably disposed in the vertical sliding grooves (7) of the fixed upright post (5) and the movable upright post (6) through a sliding pin.

3. The miniaturized optical cable cross-connecting cabinet according to claim 2, wherein
the telescopic assembly (4) further comprises a guiding mechanism, the guiding mechanism comprises a guiding member (9) and a horizontal guiding groove (10), the guiding member (9) is provided on the movable upright post (6), and the horizontal guiding groove (10) is provided on the side wall of the cabinet body (1).

4. The miniaturized optical cable cross-connecting cabinet according to claim 3, wherein
a guiding member (9) is also provided on the internal component (3), and when the internal component (3) extends out from the cabinet body (1), the guiding member (9) slides out of the horizontal guiding groove (10).

5. The miniaturized optical cable cross-connecting cabinet according to claim 1, wherein
the internal component (3) comprises a frame, which is rotationally connected to the telescopic assembly (4), and when the frame retracts back into the cabinet body (1), the wall surface of the frame facing the door panel (2) is successively provided from top to bottom with a splitter module (11), a termination module (12), and a docking module (13), and a splitter pigtail management module (14) is also provided on the side of the termination module (12); and
the wall surface of the frame away from the telescopic assembly (4) is successively provided from top to bottom with a pigtail management module (15), a splicing module (16), an optical fiber management module (17), and an optical fiber fixing module (18).

6. The miniaturized optical cable cross-connecting cabinet according to claim 1, wherein
the telescopic assembly (4) is rotationally connected to the internal component (3) through a rotating shaft (19); and/or,
the cabinet body (1) is connected to the door panel (2) through an embedded hinge (20); and/or,
the door panel (2) comprises a door panel outer layer and a door panel inner layer connected to each other, and a door panel reinforcement (21) is provided between the door panel outer layer and the door panel inner layer; and/or,
the cabinet body (1) comprises a cabinet body outer layer and a cabinet body inner layer connected to each other, and a corner reinforcement (22) is provided at a corner of the cabinet body (1) between the cabinet body outer layer and the cabinet body inner layer; and/or,
a lock rod guiding seat (23) is provided on an inner wall of the door panel (2), a lock rod (25) of an anti-theft lock (24) mounted on the door panel (2) passes vertically through a lock rod guiding hole of the lock rod guiding seat (23), and a lock rod pin hole (26) adapted to the lock rod (25) is provided in the cabinet body (1); and/or,
an operating platform (27) is rotationally provided on the inner wall of the door panel (2), a supporting platform (28) located below the operating platform (27) is also provided on the inner wall of the door panel (2), a supporting rod (29) is rotationally connected to the operating platform (27), and when the supporting rod (29) rotates to resists on the supporting platform (28), the operating platform (27) is in a horizontal state; and/or,
a plurality of cable sealing modules (30) for optical cable entry and exit are mounted at the bottom of the cabinet body (1); and/or,
a floor-mounted base (36) is provided at the bottom of the cabinet body (1).

7. The miniaturized optical cable cross-connecting cabinet according to claim 1, wherein
the cabinet body (1) is provided with an open top cover (32), and a cable sealing module (30) for optical cable entry and exit is mounted on an opening (31) provided on the open top cover (32).

8. The miniaturized optical cable cross-connecting cabinet according to claim 7, wherein
each side of the open top cover (32) of the cabinet body (1) is provided with the opening (31), wherein the cable sealing module (30) is mounted on one of the openings (31), and a blind hole sealing module (33) is mounted on the other opening (31); or, the open top cover (32) of the cabinet body (1) is provided with two mutually perpendicular axes of symmetry, wherein one axis of symmetry is a line connecting midpoints of two short sides of the open top cover (32), and the other axis of symmetry is a line connecting midpoints of two long sides of the open top cover (32); and one opening (31) is provided, which is located on one of the two sides of the open top cover (32) of the cabinet body (1); and/or
the cabinet body (1) is further provided with a closed top cover (34), and the closed top cover (34) and the open top cover (32) are alternatively mounted on the top of the cabinet body (1); and/or,
a top shielding cover (35) configured to cover the cable sealing module (30) is provided on the open top cover (32).

9. The miniaturized optical cable cross-connecting cabinet according to claim 1, wherein
a pole clamp mounting assembly (37) configured to mount on a pole clamp is provided on the side wall of the cabinet body (1).

10. The miniaturized optical cable cross-connecting cabinet according to claim 9, wherein
the pole clamp mounting assembly (37) comprises a pole clamp bracket (38) and a hoop clamp (39), wherein the pole clamp bracket (38) is provided on the cabinet body (1), and a hoop clamp hole (40) for the hoop clamp (39) to pass through is provided on the pole clamp bracket (38); or,
the pole clamp mounting assembly (37) comprises the hoop clamp (39), a first mounting portion (41), and a second mounting portion (42), wherein the first mounting portion (41) is mounted on the hoop clamp (39), the second mounting portion (42) is provided on the cabinet body (1), a protrusion (43) is provided on the first mounting portion (41), and an insertion slot (44) that is adapted to the protrusion (43) on the first mounting portion (41) is provided on the second mounting portion (42), or the insertion slot (44) is provided on the first mounting portion (41), and the protrusion (43) that is adapted to the insertion slot (44) on the first mounting portion (41) is provided on the second mounting portion (42).
